**Europäisches Patentamt**

**European Patent Office**

**Office européen des brevets**

(11) Veröffentlichungsnummer : **0 490 813 A1**

# (12) EUROPÄISCHE PATENTANMELDUNG

(21) Anmeldenummer : **91810936.4**

(22) Anmeldetag : **03.12.91**

(51) Int. Cl.$^5$ : **C04B 18/16,** C04B 28/02,
// (C04B28/02, 14:16, 14:24,
14:46, 18:06, 18:16, 18:24,
18:26, 38:08, 40:00)

(30) Priorität : **13.12.90 CH 3950/90**

(43) Veröffentlichungstag der Anmeldung :
**17.06.92 Patentblatt 92/25**

(84) Benannte Vertragsstaaten :
**AT CH DE FR GB IT LI LU**

(71) Anmelder : **Büchel, Arnold**
**Kanalweg 6**
**CH-8610 Uster (CH)**

(72) Erfinder : **Büchel, Arnold**
**Kanalweg 6**
**CH-8610 Uster (CH)**

(74) Vertreter : **Breiter, Heinz**
**Patentanwalt H. Breiter AG**
**Schaffhauserstrasse 27 Postfach 1163**
**CH-8401 Winterthur (CH)**

(54) **Baumaterial.**

(57)   Das Schütt- und/oder fliessfähige Baumaterial dient der Herstellung von Putzen, Belägen, Verkleidungen und Formkörpern. Es besteht aus einem Gemische eines feinkörnigen Grundmaterials aus bei weniger als 1000°C gebrannten Tonziegeln mit einem hydraulischen Bindemittel und einem anorganischen körnigen Schaummaterial mit hohem Isolationsvermögen. Das Baumaterial wird vom Hersteller oder erst vom Benützer am Arbeitsort gemischt und dort mit Wasser aufgeschlämmt.
   Eine spezielle Verwendungsart des mit Wasser aufgeschlämmten Baumaterials dient der Herstellung gepresster und/oder grossformatiger Formkörper und/oder Plättchenattrappen.

EP 0 490 813 A1

Die Erfindung bezieht sich auf ein schütt- und/oder fliessfähiges Baumaterial für die Herstellung von Putzen, Belägen, Verkleidungen und Formkörpern. Weiter betrifft die Erfindung eine Verwendung des Baumaterials.

Rohe Böden, Wände und Decken, aber auch Pfeiler, Säulen, Bögen und Stürze werden meist mit Belägen, Verkleidungen und/oder Putzen versehen. Dies erfolgt insbesondere aus drei Gründen:
– Dem Bauwerk bzw. dessen Bewohnern soll Schutz gegen Verwitterung, Wärme und Kälte, Lärmimmissionen und sonstige schädigende Einwirkungen verliehen werden.
– Das im rohen Zustand oft unansehnliche Bauwerk soll verschönert werden.
– Unebenheiten sollen ausgeglichen werden.

Dem Fachmann sind Beläge, Verkleidungen und/oder Putze der verschiedensten Art bekannt, beispielsweise das Verlegen von Platten oder das Aufziehen mehrerer übereinanderliegender Putzschichten.

Die verlegten Platten sind als einfache oder komplizierte Formkörper ausgebildet. Auf der Baustelle werden jedoch auch nicht als Beläge oder Verkleidungen verlegte Formkörper verwendet, beispielsweise Treppenstufen oder Fenstersimse.

In der CH-A5 675 874 wird ein Verfahren zur Herstellung von Baumaterialien für Beläge, Verkleidungen und Putze beschrieben, welche zur Aufrechterhaltung der Atmungsfähigkeit eine poröse Struktur aufweisen. Trotz der preisgünstigen Herstellung dieser porendurchsetzten Baumaterialien ist die Umweltbilanz positiv, weil das Verfahren den Einsatz von weitgehend natürlichen Ausgangsmaterialien erlaubt. Es beruht im wesentlichen darauf, dass ein mit Wasser aufgeschlämmtes, feinkörniges Grundmaterial aus bei weniger als 1000°C gebrannten Tonziegeln mit einem hydraulischen Bindemittel gemischt, die feuchte Masse in eine Form gegeben oder schichtförmig auf eine Unterlage aufgetragen und durch Austrocknen abgebunden wird.

Ausgehend von seiner obenstehenden Patentschrift hat sich der Erfinder die Aufgabe gestellt, ein Baumaterial der eingangs genannten Art zu schaffen, das - bei weiterhin positiver Umweltbilanz - die Herstellung von Gebäuden oder Gebäudeteilen mit weiter verbesserten Wärme- und Schalldämmungseigenschaften erlaubt. Durch möglichst weitgehenden Einsatz von natürlichen Abfallmaterialien soll, bei Schonung der natürlichen Ressourcen, die Wirtschaftlichkeit weiter verbessert werden.

In bezug auf das Erzeugnis wird die Aufgabe erfindungsgemäss dadurch gelöst, dass das Baumaterial aus einem Gemisch eines feinkörnigen Grundmaterials aus bei weniger als 1000°C gebrannten Tonziegeln mit einem hydraulischen Bindemittel und einem anorganischen körnigen Schaummaterial mit hohem Isolationsvermögen besteht, wobei das Baumaterial am Arbeitsort mischbar und/oder mit Wasser aufschlämmbar ist. Weiterausbildungen und spezielle Ausführungsformen sind Gegenstand von abhängigen Patentansprüchen.

Je nach den Bedürfnissen des Benutzers wird das schüttfähige Baumaterial bereits vom Hersteller oder erst an der Arbeitsstelle fertig gemischt. Das Baumaterial wird also ohne Wasseranteil gelagert und transportiert.

Je nach zugegebener Wassermenge bleibt das Baumaterial schüttfähig, wird schütt- und fliessfähig oder mit zunehmender Wasserzugabe ausschliesslich fliessfähig, ohne Bildung eines Schüttkegels.

Der Hersteller von Putzen, Belägen oder Verkleidungen, welche an Ort und Stelle als feuchte Masse auf das rohe Bauwerk aufgebracht werden, bezieht das benötigte Baumaterial
– fertig gemischt und schlämmt es mit der notwendigen Menge Wasser auf, oder
– als einzelne Komponenten und gibt diese in entsprechenden Portionen in einen Mischer, wobei das Aufschlämmen durch Wasserzugabe zum feinkörnigen Grundmaterial oder zur fertigen Mischung erfolgen kann.

Beläge können mit einem geeigneten Gegenstand zu Platten- oder Plättchenattrappen umgewandelt werden, indem man mit diesem Gegenstand Fugen zieht.

Der Hersteller von Formkörpern, vom einfachen Plättchen bis zur mehrere Quadratmeter grossen, individuell geformten Platte oder einer komplizierten Fenstersims, haben eine Produktionsstätte und sind besser ausgerüstet. Das Baumaterial kann in einem grossen Mischer, mit programmiert gesteuertem Prozess und automatisierter Komponentenzugabe, zubereitet werden, wobei das Wasser zur Herstellung der fliessfähigen Masse zum Grundmaterial oder zur fertigen Mischung gegeben werden kann. Diese Masse wird in Formen gegeben und durch Austrocknen abgebunden. Die Formkörper können auch in Pressen hergestellt werden.

Für das Baumaterial ist von wesentlicher Bedeutung, dass das Grundmaterial aus bei niedriger Temperatur, bei weniger als 1000°C, gebrannten Tonziegeln besteht, welche eine poröse Struktur haben. Dieses Grundmaterial hat den Ziegelbrand bereits hinter sich, weshalb das Baumaterial ohne jeglichen Brand, nur durch Abbinden, hergestellt wird.

Die auf einer Baustelle und in entsprechenden gewerblichen Verfahren häufig anfallenden Resten von Mauer- und Dachziegeln können mit verhältnismässig geringem Energie- und Arbeitsaufwand auf die gewünschte Korngrösse gemahlen werden, welche vorzugsweise bis 0,5 mm beträgt. Das Grundmaterial kann auch aus Abbruch-Tonziegeln hergestellt werden, ohne dass das Fugenmaterial entfernt werden muss. So können beispielsweise alte Hochkamine einer ökologisch sinnvollen und ökonomisch interessanten Verwendung zugeführt werden.

Weiter fällt Grundmaterial als Schleif-, Schneide- und/oder Sägeabfall von Tonziegeln an, der eine Korngrösse unterhalb etwa 0,5 mm hat. Beim Schneiden von Platten gemäss der CH-A 659102 beispielsweise fällt Schneidemehl von Tonziegeln in grosser Menge als dickflüssiger Schlamm an, aus welchem nach dem Stehenlassen das überschüssige Wasser abgezogen werden kann.

Insbesondere aus dekorativen Gründen kann zum Baumaterial körniger Ziegelschrott hinzugefügt werden, welcher vorzugsweise eine Korngrösse von 0,1 bis 3 mm hat. Die Farbe des Ziegelschrotts kann derjenigen des Grundmaterials entsprechen, bevorzugt wird jedoch wenigstens eine andere, insbesondere auch eine Kontrast-Farbe, gewählt. Dank des Ziegelschrotts können durch Schleifen aus mit dem Baumaterial hergestellten Flächen Strukturen herausgearbeitet werden, welche neben der durch das Grundmaterial verliehenen Basisfarbe durch die beigemischten Ziegelschrottkörner geprägt sind.

Als hydraulisches Bindemittel wird dem Grundmaterial in erster Linie Zement, insbesondere weisser Zement, zugegeben. Das mit Wasser angefeuchtete Bindemittel erhärtet selbständig und ist nach dem Abbinden wasserbeständig. Derart kann ein aus Abfallstoffen gewonnenes, tonhaltiges Grundmaterial ohne erneuten Brand gebunden werden. Selbstverständlich kann das hydraulische Bindemittel in jedem dem Fachmann bekannten Verhältnis mit den anderen Komponenten gemischt werden. Das Verhältnis Grundmaterial : hydraulischem Bindemittel kann z.B. bei 3 : 1 liegen.

Weisser Zement ist nicht nur das qualitativ hochwertigste Bindemittel, er wird auch aus ökologischen Gründen bevorzugt. Ueberdies entsteht bei Verwendung von weissem Zement ein Baumaterial hellerer Farbe, was meist erwünscht ist.

Beim Auftragen des erfindungsgemässen Baumaterials als feuchte Putzmasse ist auch Kalk als alleiniges oder zusätzliches hydraulisches Bindemittel geeignet. Der Kalkanteil wird jedoch zweckmässig niedrig gehalten, weil dieser schwerer als das substituierte tonhaltige Grundmaterial ist und eher zu Schwundrissen führt.

Das erfindungsgemäss eingemischte partikelförmige Schaummaterial kann wohl wenig Wasser aufnehmen, dieses wird jedoch rasch vom Grundmaterial und allfälligem Holzsägemehl und dgl. entzogen.

Dank ihrer porösen Struktur vermögen die eingemischten Schaummaterialien eine unerwartet hohe thermische und akustische Dämpfungswirkung zu entfalten, welche die entsprechenden Eigenschaften der mit dem Baumaterial hergestellten Putze, Beläge, Verkleidungen und Formkörper insgesamt erheblich verbessert.

Versuche haben gezeigt, dass sich das Schaummaterial umso vorteilhafter auswirkt, je feinkörniger es ist. Die Korngrösse liegt vorzugsweise zwischen 0,01 und 8 mm, insbesondere zwischen 1 und 5 mm.

Für das Aufziehen von speziell schallschluckenden Putzen beispielsweise kann einem feinkörnigeren Schaummaterial eine Fraktion Schaumkörner mit einer Korngrösse von 6 bis 8 mm zugegeben werden. Nach dem Aufziehen können die groben Körner durch kreuzweises Ueberstreichen mit einer Latte oder dgl. wenigstens teilweise aus dem Putz herausgearbeitet werden, wobei eine sehr rauhe Oberfläche entsteht, die ausserordentlich hohe Schallabsorptionseigenschaften entfaltet.

Das Schaummaterial besteht in erster Linie aus Schaumglas, welches beispielsweise aus Altglas hergestellt wird, indem dieses geschäumt und nachher zertrümmert wird. Neben oder statt Schaumglas können jedoch beispielsweise auch poröse Vulkangesteine, wie Bims- oder Tuffstein, sowie geschäumte Keramik ganz allgemein als Schaumstoff in das Baumaterial eingearbeitet werden.

Als fakultative Komponenten zur Erhöhung der Porosität des Baumaterials eignen sich, einzeln oder kumuliert eingesetzt, beispielsweise:
- Sägemehl als Abfallprodukt der Holzindustrie, wenn eine weiche, gut isolierende Verkleidung hergestellt werden soll,
- Papierschnitzel, gemahlenes oder zerfasertes Altpapier,
- andere natürliche Fasern auf organischer Basis, wie Baumwollabfälle oder Flachsfasern, welche auch als Verstärkungsfasern wirken,
- Steinwolle.

Als weitere, einzeln oder kumulativ angewendete Zusatzkomponente für das Baumaterial ist Filterstaub aus Glas-, Holz-, Textil-, Faserzement- oder Papierverarbeitungswerken von Bedeutung, weil damit einerseits Filterrückstände entsorgt und andrerseits die Abfallmaterialien einer sinnvollen Verwendung zugeführt werden können.

Zusammenfassend kann festgestellt werden, dass mit dem erfindungsgemässen Baumaterial Putze, Beläge, Verkleidungen und Formkörper auf kostengünstige, einfache Weise hergestellt werden können, welche eine stark erhöhte Wärme- und Schalldämmung bieten, eine sinnvolle Verwertung von Abfallstoffen erlauben und eine ästhtisch befriedigende Varianz in der Erscheinungsform bieten. Die Verwertung von Abfällen schont natürliche Ressourcen und verhindert ein rasches Füllen von Abfallgruben samt Zubringerverkehr.

Das mit Wasser zu einer feuchten, fliessfähigen Masse geschlämmte Baumaterial kann neben der bereits erwähnten Verwendung zur Herstellung von Putzen, Belägen, Verkleidungen und Formkörpern erfindungsgemäss auch speziell für die industrielle Fertigung gepresster und/oder grossformatiger Formkörper erfolgen. Grossformatige Formkörper sind z.B. Küchenabdeckungen.

**Patentansprüche**

1. Schütt- und/oder fliessfähiges baumaterial für die Herstellung von Putzen, belägen, Verkleidungen und Formkörpern,
dadurch gekennzeichnet, dass
es aus einem Gemische eines feinkörnigen Grundmaterials aus bei weniger als 1000°C gebrannten Tonziegeln mit einem hydraulischen bindemittel und einem anorganischen körnigen Schaummaterial mit hohem Isolationsvermögen besteht, wobei das baumaterial am Arbeitsort mischbar und/oder mit Wasser aufschlämmbar ist.

2. Baumaterial nach Anspruch 1, dadurch gekennzeichnet, dass das Grundmaterial in Form von Mahlgut, Schleif-, Schneide- und/oder Sägeabfällen von Tonziegeln, vorzugsweise mit einer Korngrösse bis etwa 0,5 mm, eingemischt ist.

3. Baumaterial nach Anspruch 1 oder 2, dadurch gekennzeichnet, dass körniger Ziegelschrott, vorzugsweise einer Korngrösse von 0,1 bis 3 mm, mit der gleichen oder einer andern Farbe als das Grundmaterial, beigemischt ist.

4. Baumaterial nach einem der Ansprüche 1 bis 3, dadurch gekennzeichnet, dass als hydaulisches Bindemittel Zement, vorzugsweise weisser Zement, und/oder Kalk eingemischt ist.

5. Baumaterial nach einem der Ansprüche 1 bis 4, dadurch gekennzeichnet, dass Schaummaterial einer Partikelgrösse von 0,1 bis 8 mm, vorzugsweise 1 bis 5 mm, eingemischt ist.

6. Baumaterial nach einem der Ansprüche 1 bis 5, dadurch gekennzeichnet, dass in feinkörniges Schaummaterial einer Partikelgrösse von vorzugsweise 0,01 bis 2 mm eine Fraktion Schaumkörner von 6 bis 8 mm Partikelgrösse eingemischt ist.

7. Baumaterial nach einem der Ansprüche 1 bis 6, dadurch gekennzeichnet, dass Schaummaterial in Form von Schaumglas, porösem Vulkangestein und/oder Schaumkeramik, vorzugsweise aus gemahlenen Abfallmaterialien, eingearbeitet ist.

8. Baumaterial nach einem der Ansprüche 1 bis 7, dadurch gekennzeichnet, dass Holzsägemehl, Papierschnitzel, gemahlenes oder zerfasertes Altpapier, Steinwolle und/oder natürliche Fasern beigemischt sind.

9. Baumaterial nach einem der Ansprüche 1 bis 8, dadurch gekennzeichnet, dass Filterstaub aus Glas-, Holz-, Textil-, Faserzement- oder Papierverarbeitungswerken beigemischt ist.

10. Verwendung des mit Wasser aufgeschlämmten baumaterials nach einem der Ansprüche 1 bis 9 für die industrielle Herstellung gepresster und/oder grossformatiger Formkörper und/oder Plättchenattrappen.

Europäisches
Patentamt

**EUROPÄISCHER RECHERCHENBERICHT**

Nummer der Anmeldung

EP    91 81 0936

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | CH-A-440 088 (E.HOFMANN & CO.)<br>* das ganze Dokument *<br>--- | 1,2,10 | C04B18/16<br>C04B28/02<br>//(C04B28/02, |
| D,Y | WO-A-9 001 468 (A.BÜCHEL)<br><br>* Ansprüche 1,2,4-7 *<br>--- | 1-4,7,8,<br>10 | 14:16, 14:24,<br>14:46, 18:06,<br>18:16, 18:24,<br>18:26, 38:08, |
| Y | DE-A-3 608 180 (F.HOPMANN)<br><br>* Seite 26, Absatz 5 *<br>* Seite 29, Absatz 2 -Absatz 3; Ansprüche<br>1,2,8,21,41-43 *<br>--- | 1-4,7,8,<br>10 | 40:00) |
| A | FR-A-1 115 932 (M.GAGNAZZI)<br>* Seite 1, linke Spalte, Zeile 5 - Zeile 22 *<br>* Seite 1, rechte Spalte, Zeile 24 - Seite 2,<br>linke Spalte, Zeile 31 *<br>--- | 1-4,8,10 | |
| A | GB-A-287 363 (L.F.TOOTH)<br>* das ganze Dokument *<br><br>----- | 1,2,8,10 | **RECHERCHIERTE SACHGEBIETE (Int. Cl.5 )**<br><br>C04B |

Der vorliegende Recherchenbericht wurde für alle Patentansprüche erstellt

| Recherchenort | Abschlußdatum der Recherche | Prüfer |
|---|---|---|
| DEN HAAG | 19 MAERZ 1992 | THEODORIDOU E. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
    Dokument

EPO FORM 1503 03.82 (P0403)